(19)

Europäisches
Patentamt
European
Patent Office
Office européen
des brevets

(11) **EP 2 446 788 A1**

(12) **EUROPEAN PATENT APPLICATION**

(43) Date of publication:
**02.05.2012 Bulletin 2012/18**

(51) Int Cl.:
**A47J 31/20** (2006.01)

(21) Application number: **10189044.0**

(22) Date of filing: **27.10.2010**

| | |
|---|---|
| (84) Designated Contracting States:<br>**AL AT BE BG CH CY CZ DE DK EE ES FI FR GB GR HR HU IE IS IT LI LT LU LV MC MK MT NL NO PL PT RO RS SE SI SK SM TR**<br>Designated Extension States:<br>**BA ME** | • **De Haas, Rogier, E.**<br>**5600 AE, Eindhoven (NL)**<br>• **Raap, Gerben**<br>**5600 AE, Eindhoven (NL)**<br>• **Van Es, Michel**<br>**5600 AE, Eindhoven (NL)** |
| (71) Applicant: **Koninklijke Philips Electronics N.V.**<br>**5621 BA Eindhoven (NL)** | (74) Representative: **Damen, Daniel Martijn**<br>**Philips**<br>**Intellectual Property & Standards**<br>**P.O. Box 220**<br>**5600 AE Eindhoven (NL)** |
| (72) Inventors:<br>• **De Jong, Gerrit, J.**<br>**5600 AE, Eindhoven (NL)** | |

(54) **Tea maker with symbol-selectable tea brewing program**

(57)    A tea maker, comprising: a user interface panel (360) including one or more brewing program selection controls (362) configured to enable a user to select one of a plurality of tea type specific brewing program symbols (364); and a controller, operably connected to the one or more brewing program selection controls, and configured to assign to each selectable brewing program symbol at least one parameter partly defining a temperature/time profile to be followed by water during brewing tea of the specific tea type.

Fig. 3

EP 2 446 788 A1

**Description**

FIELD OF THE INVENTION

The present invention relates to electric tea making appliances, and more in particular to a semi-automatic tea maker.

BACKGROUND

Brewing tea may typically involve immersing loose tea leaves in hot water, either directly or in an infuser, and subsequently allowing the tea to steep. Both the temperature of the water to whose action the tea leaves are subjected and the duration of steeping are important parameters of the tea brewing process. Moreover, they are tea type specific. For example, an unoxidized tea like green tea may, generally, be best brewed at relatively low temperatures in the range of about 70-80˚C, and left to steep for about 1-2 minutes. A fully oxidized tea like black tea, on the other hand, may preferably be brewed at a relatively high temperature of about 80-100˚C, and be allowed to steep for about 2-3 minutes.
As a person may drink many different types of tea, it may be difficult to keep track of the optimal brewing temperature and steeping time for each type. Such information may, of course, be labeled on the package of the tea, e.g. "3 minutes at 75˚C", but this would prove useful only to the rare people willing to use a stopwatch and a thermometer, or possessing a tea maker in which such data can be inputted. A tea maker of the latter kind is described in WO 2008/049,163 (Hoare et al). The publication discloses an electric tea maker comprising a vessel that is detachable from a power base. The power base is provided with an external user interface including mechanical or electrical features, e.g. knobs, dials, or keypads, for the user to input brewing variables, such as tea type, brewing temperature and steeping time. The controls of the user interface are connected to a processor, to which the user selection of variables is sent in order to control the brewing process accordingly.
A drawback of the tea maker disclosed in WO' 163 is that the user interface presents a user with a number of different controls that have to be operated independently of one another to select the desired values of a same number of parameters whose input is required for controlling the brewing process. Furthermore, since the drinking of tea may represent a moment of relaxation, a brief retreat from the demanding and regulated outside world, it is considered undesirable to encourage a person to consciously brew his tea according to a strict prescription of various brewing parameters.
It is therefore an object of the present invention to provide for a tea maker that enables the brewing of different types of tea according to optimized tea type specific brewing parameters.
It is another object of the present invention to provide a tea maker that facilitates a user in such brewing, in a way that no knowledge of the tea type specific parameters is required.

SUMMARY OF THE INVENTION

One aspect of the present invention is directed to a tea maker. The tea maker may comprise a user interface panel including one or more brewing program selection controls configured to enable a user to select one of a plurality of tea type specific brewing program symbols. The tea maker may also comprise a controller that is operably connected to the one or more brewing program selection controls, and that is configured to assign to each selectable brewing program symbol at least one parameter partly defining a temperature/time profile to be followed by water during brewing tea of the specific tea type.
The tea maker according to the present invention may include one or more brewing program selection controls, which may, for example, take the form of a single dial, a plurality of discrete buttons, or any other (set of) suitable selection control(s) known in the art. A single dial may include a marker that may be rotated to align with one of a plurality of brewing program symbols provided around a circumference of the dial, whereas in the case of the buttons, each button may be provided with one brewing program symbol that is selectable by pressing the button. In either case, each selectable tea type specific brewing program symbol may code for a water temperature/time profile to be followed during the process of brewing tea of the specific type associated with that symbol. The controller, which may supervise the operation of the tea maker, may assign the temperature/time profile to each of the brewing program symbols, and execute the selected temperature/time profile upon selection thereof. Hence, by no more than selecting a single brewing program symbol, the user may select the optimal brewing process for the type of tea to be brewed. The association between a single brewing program symbol and the different brewing parameters that define an optimal temperature/time profile for a certain type of tea greatly facilitates the userfriendliness of the tea maker. The user merely needs to select the symbol associated with the tea type he whishes to prepare. There is no need to remember or look up the parameters that are optimal for that type of tea, or to input them.
It is noted that the user does not even have to input the type of tea as such. As there are many varieties of tea, it may not be easy to establish exactly what type of tea is to be prepared, and much less what the optimal brewing parameters are. The tea maker according to the present invention may obviate both problems. According to an elaboration of the invention, a suitable brewing program symbol may be printed on a package of tea to be vended. At the same time, the controller of the tea maker may be configured to associate that symbol with the desired brewing process parameter. Hence, all a user has to do to optimally brew his tea is to select the brewing program symbol depicted on the package it came from; he may be oblivious of the tea type and the brewing process parameters concerned.

In one embodiment of the tea maker, the brewing program symbols are non-alphabetic and non-numeric.

The symbols employed to present the different brewing programs to the user may preferably be pictorial in nature, and be neither alphabetic nor numeric. The use of pictorial symbols may reduce the user's perception that he is dealing with a technological device, and enhance his experience of a temporary retreat from his busy life. To this end the brewing program symbols may further be comprised of (circular) dots, each separately visible to the naked eye, so as to set these symbols apart from the continuous-line symbols typically found on conventional electronic apparatus. The use of pictorial symbols may also reduce the manufacturing costs involved in producing the tea maker for different localities. For example, in the case of alphabetic labels, a selection control might have to mention "Black tea" in England, "Schwarztee" in Germany, and "Thé noir" in France, while in the case of a pictorial symbol, the selection control might be the same for all these countries.

As regards their content, the symbols may preferably be simple and intuitive, e.g. a picture of a white tea leaf for white tea, and a picture of a black tea leaf for black tea, so as to allow even illiterate people to operate the tea maker without effort. Although the brewing program symbols may generally be visual, they may also include tactile information to facilitate use by people that are visually impaired.

In a preferred embodiment of the tea maker, the one or more selection controls include a plurality of capacitive buttons, each provided with a tea type specific brewing program symbol.

In themselves, capacitive buttons are durable due to the lack of mechanical parts, easy to clean when implemented flush with an interface panel, and easily operable as no mechanical force is required. The buttons may be juxtaposed on a user interface panel so as to allow a user to immediately spot the brewing process symbol he is looking for, provided their number is not too large (preferably less than 8). Presenting the available brewing process symbols at a glance is to be distinguished from, for example, the use of a selection display with a menu structure, or a keypad to input information.

A temperature/time profile to be followed by water during brewing tea of the specific tea type may typically involve at least two consecutive phases: a heating phase and a steeping phase. During the heating phase, water for brewing the tea may be heated to an initial steeping temperature. Heating of the water may include boiling it, but this is not necessary. For example, in case the initial steeping temperature is set to be 80°C, water may be heated from room temperature up to 80°C directly, e.g. along an approximately straight temperature-time-path. Alternatively, the water may first be boiled and then be cooled or left to cool to 80°C. Once the water has attained the set initial steeping temperature, the steeping phase of the tea may be initiated by introducing tea leaves into the water. The duration of the steeping phase is given by the steeping time. When the steeping time has elapsed, the tea is ready for consumption.

The exemplary temperature/time profile outlined here includes three defining parameters that may differ for different tea types: the initial steeping temperature (a temperature value), a pre-steep boiling flag that controls whether or not the water is heated to its boiling point before steeping (a Boolean value, true of false), and the steeping time (a time value). The controller of the tea maker may assign a value for one or more of these parameter to a brewing program symbol of the user interface, so as to define the brewing program associated therewith.

In one embodiment, the tea maker may further comprise a water compartment; a heating element configured to heat water contained in said water compartment; and a temperature sensor, configured to generate a reference signal reflecting a temperature of the water contained in said water compartment. The controller may be operably connected to both the heating means and the temperature sensor.

In such an embodiment, the controller is enabled to actively monitor and control the temperature of the water contained in the water compartment in accordance with the selected temperature/profile. The temperature sensor may provide the controller with current temperature data, and in case at some point during the tea brewing process a higher water temperature is desired, the controller may switch on or power the heating means to heat the water. In contrast, in case a lower temperature is desired, the controller may leave the water to cool off for a while until it reaches the target temperature. A built-in timer may allow the controller to keep track of time, and to count certain time periods, such as the steeping time.

In a further embodiment, the tea maker may also comprise user notification means, such as light or sound generating means, which may be operably connected to the controller to enable it to notify a user.

According to an elaboration of the invention, the controller may be configured control the heating means to heat the water in the water compartment to the initial steeping temperature, and to subsequently control the user notification means to notify a user that the initial steeping temperature has been reached so as to prompt him to insert tea into the water. In case the value of the Boolean pre-steep boiling flag is true, the controller, in controlling the heating means to heat the water in the water compartment to the initial steeping temperature, may be configured to first heat the water to its boiling point and to subsequently let it cool to the initial steeping temperature.

To facilitate the immersion or insertion of tea in the water, the tea maker may also comprise a tea filter that is configured to be at least partially inserted into the water compartment. In addition, the tea maker may include a sensor that is configured to detect insertion of the tea filter into the water compartment. The controller may then be configured to automatically detect the insertion of the tea filter into the water compartment, and upon such detection, to count the steeping time. Upon expiry of the steeping time, the controller may control the user notification means to notify the user that steeping has been completed and the tea is ready for consumption.

Another aspect of the present invention is directed to an assembly including a tea package and a tea maker. The tea package may be configured to contain tea (leaves) and be provided with a brewing program symbol that codes for at least one parameter partly defining a temperature/time profile to be followed by water during brewing tea of the tea leaves contained by the package. The brewing program symbol provided on the tea package may be comprised by the plurality of brewing program symbols of the selection control. Such an assembly enables a user, without any specific knowledge of the tea in the package, to optimally brew the tea by no more than selecting the symbol printed thereon.

These and other features and advantages of the invention will be more fully understood from the following detailed description of certain embodiments of the invention, taken together with the accompanying drawings, which are meant to illustrate and not to limit the invention.

BRIEF DESCRIPTION OF THE DRAWINGS

Fig. 1 is a schematic cross-sectional side view of an exemplary tea maker according to the present invention, including a vessel and a power base;

Fig. 2 is a schematic exploded view of the power base of the tea maker shown in Fig. l, illustrating its layered composition;

Fig. 3. is a schematic top view of the power base of the tea maker shown in Fig. 1, illustrating its user interface panel;

Fig. 4. is a schematic cross-sectional side view of a capacitive button of the interface panel (Fig. 4A), and a projection display of the interface panel (Fig. 4B);

Fig. 5 is a table, schematically illustrating in cross-sectional side views of the capacitive buttons and the projection display of the interface panel, different constructive embodiments in case a wood top layer is used; and

Fig. 6 is a graph illustrating a number of tea type specific temperature/time profiles that may be associated with the brewing process symbols on the user interface panel shown in Fig. 2.

DETAILED DESCRIPTION

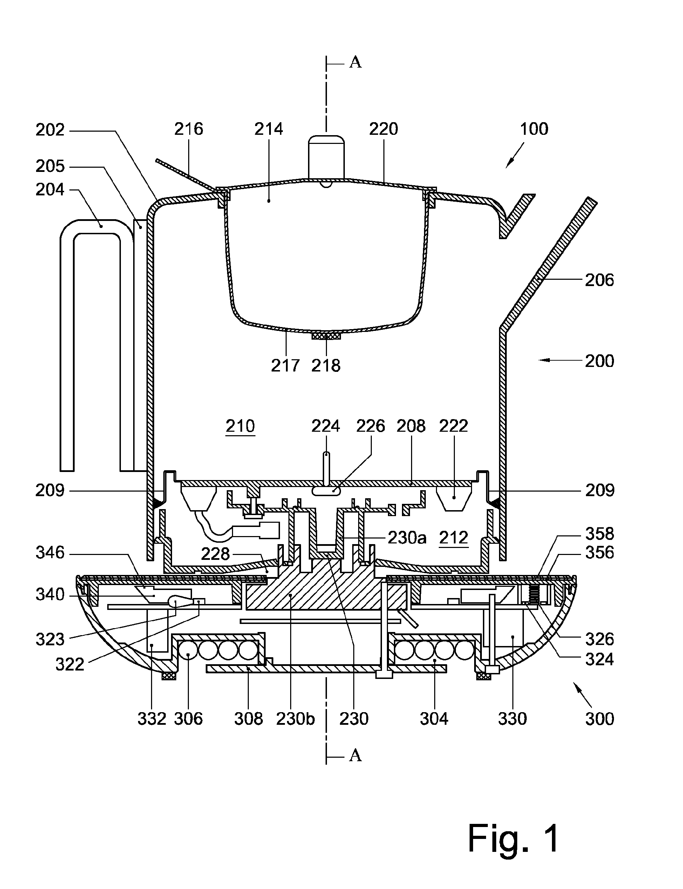

Fig. 1 is a schematic cross-sectional side view of an exemplary tea maker 100 according to the present invention. The tea maker 100 may comprise two main, detachably connectable components: a vessel 200 and a power base 300.

The vessel 200 may include a main body 202. In the embodiment of Fig. l, the main body 202 is depicted as a single-walled structure. It is contemplated, however, that a different embodiment of the tea maker 100 may feature a vessel 200 having a double-walled main body 202, in particular to improve thermal insulation of the interior of the vessel. In either case, the main body 202 may be provided with a handle 204 for managing it. The handle 204 may be connected to the main body 202 through a body of thermally insulative material 205 to prevent excessive warming of the handle during use. A watertight partition 208 may divide the interior of the vessel 200 into a water compartment 210 and a lower compartment 212. The water compartment 210 may extend between the top of the vessel 200 and the watertight partition 208, whereas the lower compartment 212 may extend between the watertight partition and the underside of the vessel. A flexible bridge 209, e.g. a relatively thin annular slab of metal, may be used to connect, e.g. by welding, the water tight partition 208 to an inner side or wall of the main body 202, so as to accommodate thermal expansion and/or contraction of the different parts during operation.

The water compartment 210 may be accessible via a central opening 214 in the upper side of the vessel 200 that is be coverable by a hinged or detachable lid 220. The vessel 200 may also provided with a spout 206 that allows water to be poured out from the water compartment 210.

The opening 214 may be shaped to receive a removable tea filter 216, which may include an at least partly liquid permeable, for example meshed, basket 217 that can be lowered into the water compartment 210. The basket 217 may be made of any suitable material, but is preferably made of stainless steel. The mesh or alternative liquid permeable features of the basket 217 may be fine enough to contain tea leaves during steeping, and for example include openings having a diameter in the range of 0.1-0.5 mm. The filter 216 may also be fitted with a permanent magnet 218, which may be attached to or incorporated into bottom part of the basket 217. This may allow the magnet's 218 presence, and hence tea filter's 216 presence, in the water compartment 210 to be detected by a reed switch 226 provided in the lower compartment 212.

The lower compartment 212 may accommodate a for example arc-shaped electric heating element 222 that may be attached to the underside of the partition 208, which forms the bottom of the water compartment 210. The heating element 222 may have a dissipative power output suitable for heating a filled up water compartment 210 within about 2-5 minutes, e.g. 1 to 3 kW. To promote the transfer of heat from the heating element 222 to the water in the water compartment 210, the partition 208 may be made of a material with a good thermal conductivity, such as aluminum or copper, allowing it to act as a heat diffuser.

The partition 208 may include a central opening through which a temperature sensor 224, e.g. an NTC thermistor, extends from the lower compartment 212 into the water compartment 210. A seal, e.g. a silicone O-ring, may be provided to ensure the watertightness of the partition 208 at the temperature sensor's position. Alternatively, a temperature sensor 224 may be located below/against an underside of the partition 208, so as to measure the temperature in the water compartment 210 through partition 208, which eliminates the need for water sealing.

The lower compartment 212 may further accommodate a reed switch 226 that is configured for cooperation with a permanent magnet 218 provided on or incorporated in the removable tea filter 216. The reed switch 226 and the magnet 218 may be disposed such that the reed switch is actuated by the magnetic field of the magnet when the tea filter 216 is placed in the vessel 200, giving it the function of a proximity sensor or, more specifically, a tea filter presence sensor. To promote the detectability of the tea filter 216 using only a single reed switch 226 and a single magnet 218, the former may be attached to a central portion of the watertight partition 208, and the latter may be disposed in a central bottom area of the basket 217. This may eliminate the sensitivity of the detection of the tea filter 216 to the angular position in which it is placed in the water compartment 210 (the angular position seen relative to a central, vertically extending axis A of the tea maker 100). In particular when the reed switch 226 is fixed to the partition 208, it may be enclosed in a thermally insulating casing, e.g. a silicone tube, that spaces it apart from both the partition and the heating element 222 sufficiently to prevent overheating.

Although a magnet 218 and a reed switch 226 may form a reliable and costeffective tea filter presence sensor, it is contemplated that an alternative embodiment of the tea maker 100 may include a different (i.e. non-magnetic) type of sensor for detecting insertion or placement of the tea filter 216 in the water compartment 210 of the vessel 200, such as an optical sensor, e.g. a light source in combination with a photo detector, or a mechanically operated sensor, e.g. a pressure switch. In principle, any sensor suitable for the stated purpose may be used.

A central recess 228 in a bottom of the vessel 200 may grant access to a vessel portion 230a of an electric, for example 5-pole, connector 230. The vessel portion 230a of the connector 230 may be mounted to a bottom side of the partition 208, and be configured for functional engagement with a complementary power base portion 230b of the connector. When the vessel 200 rests on the power base 300, and the two connector portions 230a, 230b are in mutual engagement, power and data signals may be exchanged between the power base and the vessel through the connector 230. It is understood that all electrical components in the vessel 200 (including the electric heating element 222, the temperature sensor 224 and the reed switch 226) may be electrically connected to the vessel portion 230a of the electric connector, although wires to this end have been omitted from the drawings for reasons of clarity.

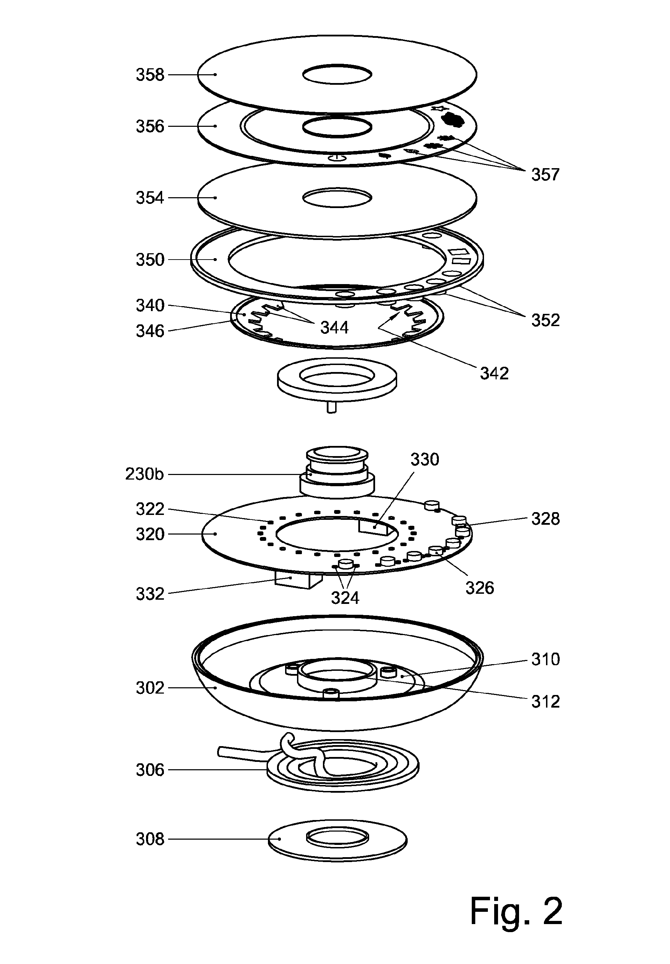

The construction of the power base 300 is best illustrated with reference to both Fig. 1 and Fig. 2, the latter showing a schematic exploded view of the power base that illustrates its generally layered composition.

The power base 300 may include a main body 302. In the depicted embodiment, the main body 302 is a generally bowl-shaped, injection molded plastic shell. An underside of the main body 302 may be shaped to define an annular recess 304 for storing a power cord 306. To prevent a wound and stored power cord 306 from dropping out of the recess 304, a radially inner portion of the annular recess 304 may be covered by a bottom cap 308 that may be screwingly fixed to the main body 302. The main body 302 of the power base 300 may further include a mounting plateau 310. The mounting plateau 310 may include a centrally disposed, upstanding annular ridge 312 on which the power base portion 230b of the electrical connector 230 may be installed. A more radially outward portion of the mounting plateau may support an annular printed circuit board (PCB) 320. The PCB 320 may mechanically support and electrically connect a number of components, including:

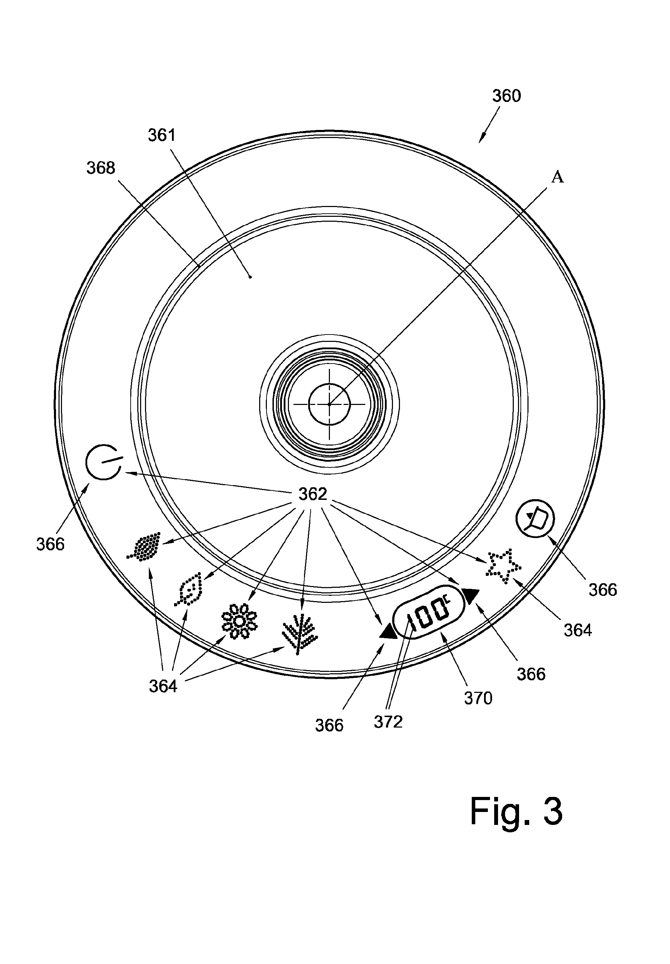

- a plurality of independently controllable first illumination means 322, in particular light emitting diodes (LEDs). The first illumination means 322 may preferably be equidistantly spaced along a circular or otherwise shaped path surrounding the central opening of the annular PCB 320. As will be elucidated below, the first illumination means 322 may cooperate with an annular light guide 340, to be disposed on top of the PCB 320, in order to form a illuminable ring-shaped brewing progress indicator 368 of an interface panel 360 of the tea maker 100; the interface panel 360 and progress indicator 368 are best shown in Fig. 3. The LEDs of the first illumination means 322 may be coupled and arranged to the PCB 320 such that their light 323, as illustrated in Fig. I, is emitted in a substantially radially outward direction, which may be substantially parallel to the plane of the illuminable ring-shaped brewing progress indicator 368. The first illumination means 322 may comprise LEDs of a single color or LEDs of multiple colors, possibly in the form of multi-color LEDs. The exemplary embodiment of the tea maker 100 illustrated in Figs. 1-2 includes twenty-four first illumination means 322 in the form of LEDs; it is contemplated, however, that different embodiments of the tea maker 100 may include a different, smaller or larger, number of first illumination means 322.

- a plurality of capacitive sensors 326, one for each capacitive button 362 of the interface panel 360. In the depicted embodiment the capacitive sensors 326 are shown as capacitive coils, one for each of the eight capacitive buttons 362.

- a plurality of independently controllable second illumination means 324, in particular LEDs, disposed adjacent the capacitive sensors 326 and configured to illuminate the respective associated capacitive button 362. In the depicted embodiment, two LEDs 324 are disposed on opposite sides of each capacitive sensor 326.

- a plurality of independently controllable third illumination means 328, in particular LEDs, for illuminating a projection display 370 that, as such, is best shown in Fig. 3. In the depicted embodiment, the projection display 370 includes one two-segment and two seven-segment indicators, which together are capable of indicating numeric values from 0 to 199. Altogether, the third illumination 328 means may thus be comprised of sixteen LEDs. In case the projection display includes additional indications, e.g. a "°C"-indication or a "min."-indication for temperature and time, respectively, each of these extra indications may be provided with its own, dedicated third illumination means/LED(s).

- a loudspeaker 330 or other suitable electroacoustic transducer, capable of generating sound to notify a user.

- a central controller 332. The controller 332 may be operably connected to all the electric components in the power base 300, and when the vessel 200 is placed on the power base such that the two connector portions 230a, 230b are in mutual engagement, also to the electric components in the lower compartment 210 of the vessel 200. In addition, the controller 332 may typically include a processor or an integrated circuit capable of executing a certain program or series of instructions, so as to enable it to perform the actions described in this text. The construction and use of integrated circuits in is well known in the art, and will not be elaborated upon.

As is clearly visible in Fig. 2, the PCB 320 may be topped with a series of annular (i.e. having a central opening for encompassing the base portion 230b of the electric connector 230), more or less disc-shaped components. In upward order these components include: a light guide 340, a focusing mask 350, a transparent body 354, a masking layer 356 and a diffusion layer 358.

The light guide 340 may comprise a ring of an optically transmissive material, such as glass or a transparent plastic, e.g. polycarbonate or polymethyl methacrylate (better known as acrylic glass, or PMMA). The ring may have a wavy or sinuate inner circumferential edge 342, with a number of equidistantly spaced, radially inwardly extending protrusions 344, one for each of the first illumination means 322. In an assembled condition, the radially inwardmost edges or tips of the protrusions 344 may abut the light-emitting surfaces of the first illumination means 322, allowing them to couple light into the light guide 340. An upper, outwardmost edge of the light guide may form a light escape strip 346. To allow light, coupled into the light guide 340 by the first illumination means 322, to escape from the guide via the light escape strip 346, the exterior surface of the strip may be suitably treated, for example by abrasion, bending, or notching. Such treatment may frustrate the total internal reflection at the exterior surface boundary of the strip 346, and thus permit at least a fraction of the light incident on the boundary to be transmitted therethrough.

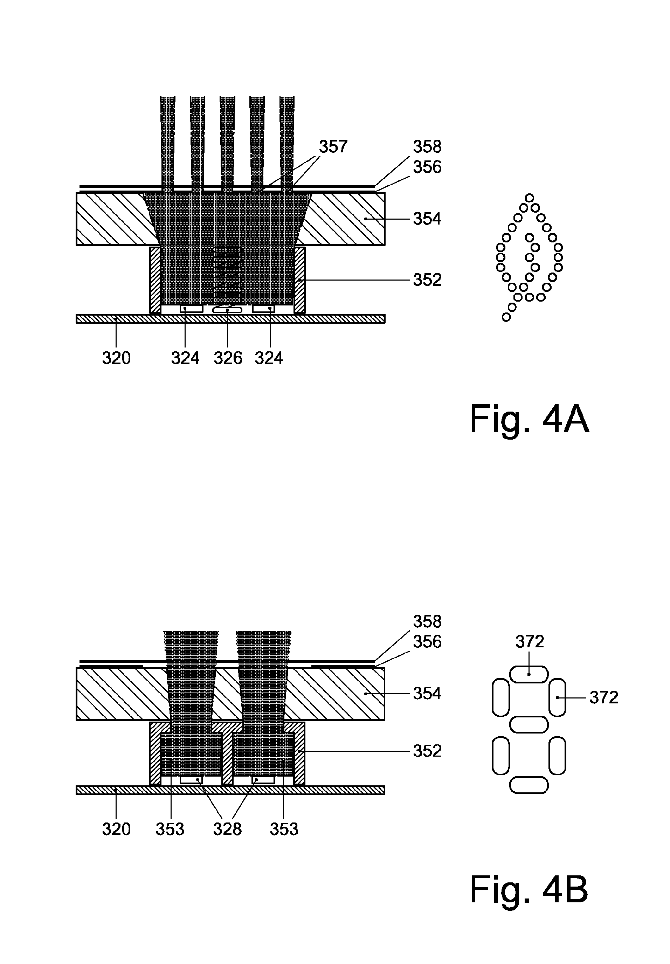

The focusing mask 350, which may have an inner opening sufficiently large to encompass the light guide 350, may include a ring with a number of opaque, for example black-colored light containers 352 attached thereto (see also Figs. 4A,B). A light container 352 may be associated with either a capacitive button 362, or with a segment indicator of the projection display 370. Each of the light containers 352 associated with a capacitive button 362 may be generally jacket shaped, so as to form a light chamber in which both the second illumination means 324 and the capacitive sensor 326 of the respective button can be enclosed (see Fig. 4A). The light containers 352 associated with the projection display 370 may comprise a number of substantially vertically extending slots 353. Each of the slots 353 may define a single segment 372 of the projection display, and be uniquely associated with one or more of the third illumination means 328 (see Fig.4B). The upper edges of the walls of the light containers 352, in particular those associated with the projection display 370, may extend a little inward (shown in Fig. 4B), so as to form a well-defined opening in the light-emitting end of the light container 352 that helps shape the cone of light that can escape therefrom. In fact, such inwardly extending edges may fulfill the function of a mask, and locally replace the masking layer 356 to be discussed below. The light containers 352 may be relatively high, e.g. about 10 mm, to ensure that light emitted by the second and first illuminations means 324, 328 at the base of the light containers, in a direction that is not at least approximately perpendicular to the plane of the PCB 320 on which they are mounted, is absorbed by the black-colored walls of the containers.

On top of the focusing mask 350 may come the transparent body 354, the masking layer 356 and the diffusion layer 358. Although Fig. 2 shows these items as separable parts, they may preferably be integrated. That is, the transparent body 354 may serve as a mechanical carrier, on an upper side of which the relatively thin masking layer 356 and light diffusion layer 358 may be applied, in that order.

The transparent body 354 may include an annular disc made of a transparent and mechanically strong material, such as glass or poly-carbonate. The disc may have a thickness on the order of millimeters. Its upper side may be coated with a thin, opaque masking layer 356. The masking layer 356 may have a thickness on the order of tens of micrometers, and be applied to the transparent body using a conventional coating technique, such as screen printing. At the locations associated with the ring-shaped brewing progress indicator 368, the capacitive buttons 362 and the projection display 370, the masking layer 356 may comprise transparencies 357 that, alone or in groups, define illuminable symbols 364, 366 or segments 372 of the interface panel 360. In the depicted embodiment, the entire area of the masking layer 356 associated with the projection display 370 is transparent (instead of multiple areas, each associated with single segment 372), which is possible because the masking function for the projection display 370 is performed by the inwardly extending top edges of the walls of the light container 352 of the display (see Fig. 4B). The masking layer 356, in turn, may be covered with a light diffusion layer 358. The primary function of the light diffusion layer 358 is that of a projection screen, on which the patterns of the masking layer 350 can be imaged when backlit by the second and third illumination means 324, 328 provided on the PCB 320. The light diffusion layer 358 may further act as a wear resistant, preferably watertight varnish. To serve both purposes, the light diffusion layer 358 may be composed of a conventional lacquer comprising light scattering pigment particles of, for example, titanium dioxide or barium sulphate. In order to facilitate sharp projections and prevent complete opacity, the light diffusion layer may generally have a thickness smaller than about 0.1 mm.

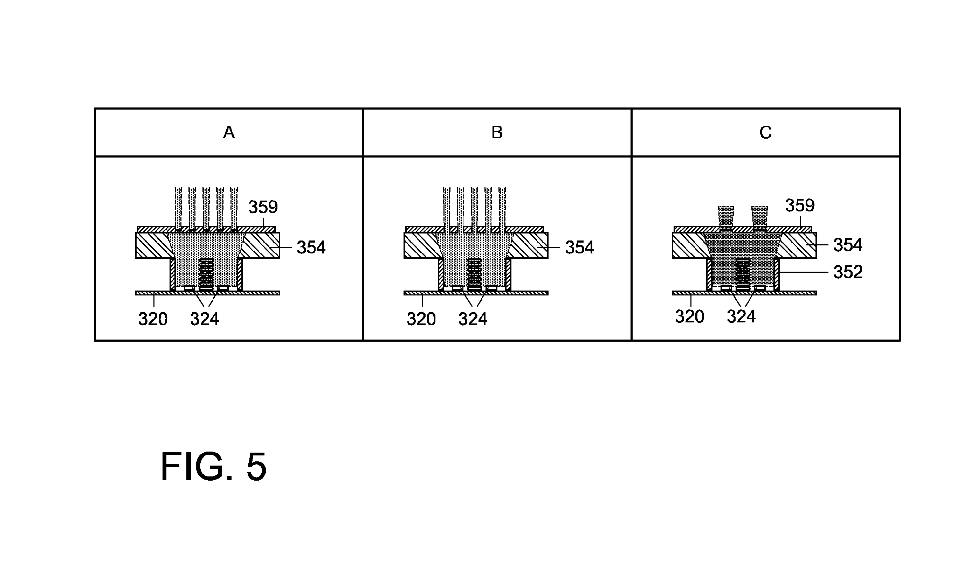

In one embodiment of the tea maker 100, the diffusion layer 358 may be made of wood; in such an embodiment the wooden diffusion layer is referred to with reference numeral 359. Wood is a natural material with a calming aura that fits with the naturalness and culture of tea, and may therefore be a material of choice. It is, however, also opaque. Figs. 5A and 5C schematically illustrate how symbols 364, 366 of capacitive buttons 362 may nevertheless be made visible on the user interface panel 370. It is understood that, although Fig. 5 depicts the construction of capacitive buttons 362, it is, mutatis mutandis, equally applicable to the segments 372 of the projection display 370 and other indicators, such as a illuminable brewing progress indicator 368, on the user interface panel 360. The wooden diffusion layers 359 of Figs. 5A and 5C may both be manufactured by providing a slab of wood or wood veneer, for example having a thickness on the order of millimeters, and selectively milling or otherwise reducing it to a thickness on the order of several tenths of millimeters, e.g. 0.1-0.4 mm, at the locations corresponding to illuminable portions of the symbols 364, 366, the segments 372 and/or the brewing progress indicator 368. At thicknesses of tenths of millimeters, the wood becomes translucent, such that light emanated by the first, second and/or third illumination means 322, 324, 326 may shine through it, and the wood may act as a diffusion layer.

In Fig. 5A, the thickness of the wooden slab has been selectively reduced by removing material from the front or outer side thereof, while in Fig. 5C, material has been removed from the back or inner side. Both embodiments offer the advantage that the diffusion layer 359 remains a closed layer, having no perforations through which moisture may easily access the power base 300. However, in case it is desired that the diffusion layer has a smooth or flat front surface without notches or recesses, such as in the case of a 'dead panel' user interface, the embodiment of Fig. 5C may be preferred.

With reference to the layered construction of the power base 300, it is noted that in embodiments comprising a wooden diffusion layer, the masking layer 356 shown in Fig. 2 may be omitted from the construction of the tea maker 100 or be disposed on the other side (i.e. the bottom side) of the transparent body 354. In some embodiments, in particular those not featuring a masking layer 356 provided against the bottom or inner side of the wooden diffusion layer 359, a translucent white layer may be attached to the back side of the wooden diffusion layer in order to enhance the visibility of the illuminated symbols 364, 366, segments 372 or brewing progress indicator 368. Such a translucent white layer may be padprinted, lacquered, screen printed or otherwise provided on the back side of the wooden diffusion layer 359.

The transparent body 354 itself may be manufactured and attached to the wooden diffusion layer 359 by means of insert molding. In the embodiment of Fig. 5C, the resin used for the insert molding process may at least partially fill up the recesses in the back side of the wooden diffusion layer 359, and thus provide mechanical back support for the thinned, translucent portions thereof.

For comparison, Fig. 5B illustrates an alternative embodiment that may be manufactured in a generally similar manner as the embodiments of Figs. 5A and 5C, except that (through)holes or perforations may be milled in the slab of wood. The construction of Fig. 5B may also be used for the symbols 366, 364, the segments 372 and/or the brewing progress indicator 368, but may generally be less preferred because small perforations may prove difficult to fill with resin during insert molding of the transparent body 354 as air may be entrapped in the cavities. In addition, it will be clear that, due to the perforations, the wooden top layer in the construction of Fig. 5B may not actually serve as a diffusion layer. This implies that it is less suitable for creating 'dead panel' user interfaces, since the perforations of the wood would be visible on the interface panel 360 at all times.

Fig. 3 is a schematic top view of the power base 300 of the tea maker 100, illustrating its user interface panel 360. It will be clear from the foregoing that the user interface panel 360 may be a so-called 'dead panel'. That is, its visible surface may not include any permanent marks, and the symbols 364, 366, segments 372 and brewing progress indicator 368 shown in Fig. 3 may be visible only when actively illuminated by the internal first, second and third illumination means 322, 324, 328. Accordingly, the user interface panel 360 may appear blank in case the tea maker 100 is unplugged from the mains.

The user interface panel 360 may feature a number of juxtaposed capacitive buttons 362, each provided with its own symbol 364, 366. From left to right the panel 360 depicted in Fig. 3 includes: a power on/off button, four pre-programmed brewing program selection buttons (to the left of the projection display 370), two display input buttons (one on either side of the display), and one programmable brewing program selection button (to the right of the projection display 370). To the right of the latter brewing program selection button, the user interface panel 360 includes a filter placement indicator, which is not a button but merely an illuminable icon.

The power on/off button, the two display input buttons and the filter placement indicator may each be provided with a functional symbol 366. The functional symbol 366 of the power on/off button may preferably be conventional for ease of recognition by the user, and may, if desired be padprinted or laser engraved in or on the diffusion layer 358, 359, or made like a burn mark by a laser process, instead of being provided in the structure of the masking layer 356 as described above. The same applies to the two display input buttons, which in the embodiment depicted in Fig. 3 are provided with functional symbols in the form of solid left resp. right pointing triangles. Their purpose is to enable a user to manipulate the figures shown on the display. The brewing program selection buttons may each be provided with a brewing program symbol 364. As will be explained below, the controller 332 of the tea maker 100 may assign a tea type specific brewing program to each of these symbols 364. The brewing program symbols 364 themselves may preferably be non-numeric and non-alphabetic, so as to reduce a user's perception that he is dealing with a complicated technological device. The use of pictorial symbols may also reduce the manufacturing costs involved in producing the tea maker 100 for different localities. For example, in the case of alphabetic labels, a button 362 might have to mention "Black tea" in England, "Schwarztee" in Germany, and "The noir" in France, while in the case of a pictorial symbol, the button might be the same for all these countries. Furthermore, the brewing program symbols 364 may preferably be comprised of separate, approximately circular dots, setting them apart from the continuous-line symbols typically found on conventional apparatus.

Besides the capacitive buttons 362 and the filter placement indicator, the user interface panel 360 may also feature a projection display 370 and a ring-shaped brewing progress indicator 368. The area of the user interface panel 360 bounded by the brewing progress indicator 368 may define a vessel reception location 361 for receiving the vessel 200, as shown in Fig. 1.

The brewing progress indicator 368 may be illuminated by the first illumination means 322, whose light may be successively transmitted through the light guide 340, the transparent body 354, the respective transparencies 357 in the masking layer 356, and onto the light diffusion layer 358. The construction of the light guide 340 may preferably be such that the brewing progress indicator 368 may be considered to be comprised of a series of connected transparent sections, each of which may be lit independently of the others by switching the associated first illumination means 322 on or off. Although the brewing progress indicator 368 may in principle have any suitable shape, it may preferably be substantially circle-part-shaped or ring-shaped. As such, it may extend around a center of the user interface 360, e.g. along a perimeter of an inner edge of the user interface panel 360, at a distance therefrom. The inner diameter of the brewing progress indicator 368 may preferably be greater than an outer diameter of (at least the bottom of) the vessel 200. In such an embodiment, the brewing progress indicator 368 may surround a vessel 200 placed on the power base 300 at the vessel reception location 361, such that, in a fully illuminated state, it is still at least partly (typically for about one half) visible to a user at any position next to the tea maker 100.

Now that the construction of the tea maker has been described in some detail, attention is invited to its operation.

A brewing process to be executed by the tea maker 100 may typically comprise the following series of steps:

1. Brewing program selection
2. Heating water to selected initial steeping temperature
3. Tea filter placement
4. Steeping tea for selected steeping time
5. Notifying user that tea is ready

Brewing program selection involves the choice of a tea brewing program by the user, wherein 'brewing program' refers to a certain temperature/time profile to be followed by the water contained in the water compartment 210 of the vessel 200 during the tea brewing process. A temperature/time profile may typically involve at least two consecutive phases: a heating phase (step 2) and a steeping phase (step 4). During the heating phase, the water in the vessel 200 may be heated to an initial steeping temperature. Heating of the water may include boiling it, but this is not necessary. For example, in case the initial steeping temperature is set to be 80°C, water may be heated from room temperature up to 80°C directly, e.g. along an approximately straight temperature/time-path. Alternatively, the water may first be boiled and then be cooled or left to cool to 80°C. Once the water has attained the set initial steeping temperature, the steeping phase of the tea may be initiated by placement of the tea filter (step 3). The duration of the steeping phase is given by the steeping time. When the steeping time has elapsed, the tea is ready for consumption (step 5).

A temperature/time profile outlined above may include three defining parameters that may differ for different types of tea: the initial steeping temperature (a temperature value), a pre-steep boiling flag that controls whether or not the water is heated to its boiling point before steeping (a Boolean value, true of false), and the steeping time (a time value). The controller 332 of the tea maker 100 may assign a value for one or more of these parameters to a brewing program symbol 364 of the user interface panel 360, so as to define the brewing program associated therewith.

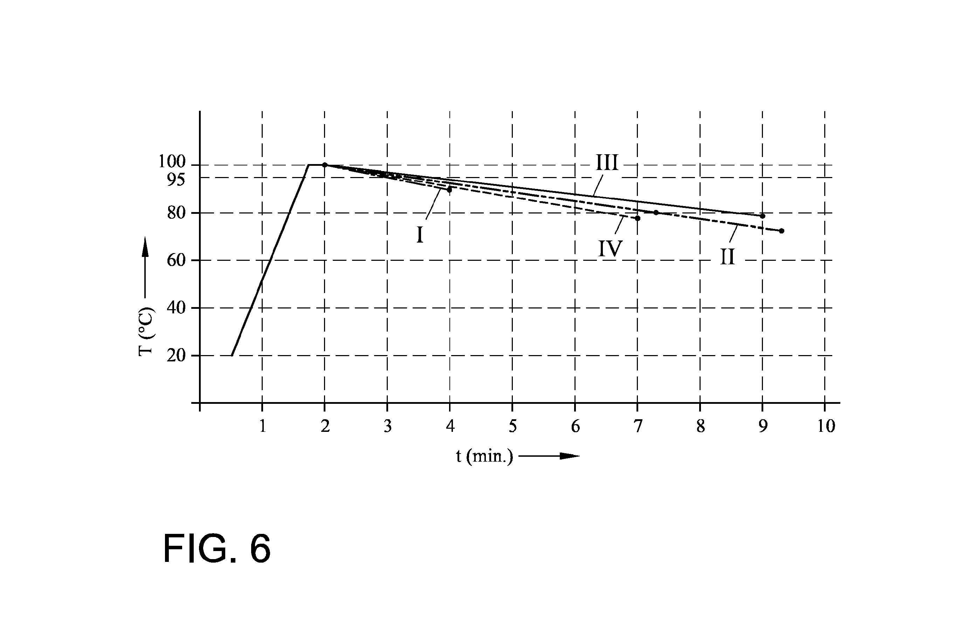

Fig. 6 illustrates four temperature/time profiles I, II, III, IV that may be associated with the four pre-programmed brewing program selection buttons of the user interface panel 360 shown in Fig. 3. The leftmost brewing program selection button, featuring a brewing program symbol in the form of a fully illuminated tea leaf, may for example be associated with a brewing program for black tea. The controller 332 may accordingly assign the values 100˚C, true, and 2 minutes to the initial steeping temperature, the pre-steep boiling flag and the steeping time, respectively. The second brewing program selection button from the left, featuring a symbol in the form of a edge-lit tea leaf, may likewise be associated with a brewing program for green tea, and the controller 332 may successively assign the values 80˚C, true, and 2 minutes to the aforementioned variables, in that order. The third and fourth symbols from the left, having the shape of a flower and a rooibos plant respectively, may in turn be associated with brewing programs for respectively herbal tea and rooibos tea. The controller 332 may assign the values 100˚C, true, and 7 minutes to the former brewing program symbol, and the values 100˚C, true and 5 minutes to the latter. Fig. 6 graphically illustrates these assignments. It is understood that the above-described assignments are exemplary only, and that, in principle, any combination of values may be assigned to any brewing process symbol.

To enable the selection of a brewing program by the user, the controller 332 may suitably illuminate the brewing program selection symbols 364 in the user interface panel 360 by powering the associated second illumination means 324. The controller 332 may, for example, first illuminate all symbols 364, in order to present the user with all available options, and then keep only a selected symbol illuminated to provide the user feedback of the selection. The controller 332 may, in addition or alternatively, provide feedback to the user by making symbols 364 blink, by changing their colors (if the second illumination means provide for light of different colors), or by generating sounds through the loudspeaker 330 to accompany a selection.

Once a user 'presses' a brewing program selection button to select the brewing program of his choice, the controller 332 may load the corresponding brewing parameters from its memory. In case the user pressed a pre-programmed brewing program button, the controller 323 may immediately proceed to step 2 of the brewing process. Alternatively it may wait for a confirmation before starting the heating phase (e.g. through pressing the selected button again). In case the user pressed the user-programmable brewing program selection button, the controller may present the selectable parameters of the brewing program to the user via the projection display 370 for optional review. When the user has entered his preferences, the controller 332 may proceed to step 2 of the brewing process.

To heat the water in the vessel 200 to the initial steeping temperature in accordance with the temperature/time profile associated with the selected brewing program, the controller 332 may selectively switch the electric heating element 222 on and off. Alternatively, the controller 332 may, for example, vary the power supplied to the heating element 222, or employ a more sophisticated PID-controller strategy. When the heating element 222 is switched on, it may generate heat that is transferred to the water, causing its temperature to rise. When the heating element 222 is switched off, heat may slowly leak from the vessel 222, causing the water temperature to drop. The water temperature itself may be measured by means of the temperature sensor 224. Accordingly, the controller 332 may control and monitor the progress of the heating phase, and once the selected initial steeping temperature is reached, it may notify the user that the tea filter 216 may be placed (step 3 of brewing process), e.g. by suitably illuminating the filter placement indicator on the user interface panel 360.

As a safety feature, the heating step may include an under- and/or overfill protection. An underfill situation occurs when there is no or a too small amount of water in the water compartment 210 during the heating phase. In the event an underfill remains undetected, it may result in an overheated heating element 222 due to the fact that the element is insufficiently capable to give off its heat. An overfill, in contrast, occurs when there is too much water in the water compartment 210. The high water level that characterizes an overfill situation may be dangerous as rapidly heated water may spit from the spout 206 of the vessel 200, or splash against its lid 220. To detect an overfill situation, the controller 332 of the tea maker 100 may be configured to determine, during heating the water to the initial steeping temperature, an increment in the temperature of the water over a certain time interval of heating; to determine using said temperature increment, the duration of the observed time interval of heating and data regarding a specific heat capacity of water and a dissipative power of the heating element, an amount of water contained in the water compartment 210; to compare the determined amount of water to a maximum water amount-reference value; and in case the determined amount of water is greater than the maximum water amount-reference value, to stop heating the water. To detect an underfill situation, the controller 332 may similarly be configured to compare the determined volume of water to a minimum water volume-reference value; and in case the determined volume of water is smaller than the minimum water volume-reference value, to stop heating the water.

The amount of heat $Q$ required to raise the temperature of a mass of m kilograms of water by 4T degrees Celcius is dependent on the specific heat capacity c of water, which is about 4.18 Joule/gram°Celcius. The time 4t it takes to heat the mass of water by 4 T degrees Celcius is furthermore dependent on the dissipative power P of the heating element used to supply the heat. Mathematically, the relation between these variables may be expressed as:

$$Q = P \cdot \Delta t = c \cdot m \cdot \Delta T \qquad (1)$$

The controller 332 of the tea maker 100 may be programmed with knowledge of the values of P and c. Using an internal timer to monitor the lapse of a representative period of heating time 4t, e.g. 10-50 seconds, and measuring the increment in water temperature 4Tthat occurs during this period of heating by means of the temperature sensor, it may calculate the amount of water contained in the water compartment, either in units of mass (e.g. kilograms), units of volume (e.g. liters; obtainable from m by dividing it by the density of water per liter), or any other suitable unit. In the case of an overfill protection, the controller 332 may subsequently compare the calculated amount of water with a pre-programmed reference value that represents the maximum, water compartment 210-specific amount of water that can be heated and poured safely. In case it finds that the amount of water contained in the water compartment exceeds the safe maximum, it may stop the heating of the water, and notify the user. In the case of an underfill protection, the controller may subsequently compare the calculated amount of water with a pre-programmed reference value that represents a minimum, water compartment 210-specific amount of water required to operate the device safely. In case it finds that the amount of water contained in the water compartment is smaller than the safe minimum, it may switch off the heating element 222 to stop the heating of the water, and notify the user.

At the time the tea maker 100 notifies the user that that the tea filter 216 may be placed, a user may be temporarily occupied and unable to respond to the notification. To accommodate situations like these, the controller 332 may be configured to keep the water temperature close to the set initial steeping temperature during the time it awaits placement of the filter 216. That is, the controller 332 may be configured to monitor the temperature of the water in the water compartment 210, and in case it notices that the temperature drops below the set initial steeping temperature by more than a predetermined value, e.g. 3°C or 5°C, it may temporarily re-activate the heating element 222 to bring the temperature back to the initial steeping temperature. The controller 332 may preferably maintain the water temperature close to the initial steeping temperature for no more than a predetermined period of time, e.g. 5-10 minutes. If after this period no filter 216 has been placed the controller 332 may shut down the tea maker 100, so as to prevent it from heating water that appears to be forgotten.

Placement (and removal) of the tea filter 216 (step 3) may be detected by the controller 332 through the reed switch 226, which may be operated by the magnet 218 provided in or on the filter. When the controller 332 has notified the user that the tea filter 216 may be placed, and placement of the filter is subsequently detected, the controller may initiate the steeping phase of the brewing process (step 4).

To this end the controller 332 may cancel any notification that the filter 216 may be placed, and switch off the heating element 222. Then it may count the steeping time associated with the selected brewing program. When the steeping time has elapsed, it may notify the user that the tea has been brewed and is ready for consumption (step 5).

As described, some teas, such as black tea, may have a relatively high optimal steeping temperature, e.g. around 90-100°C. A consequence of such high steeping temperatures is that the freshly brewed tea, at the end of the steeping phase, may be relatively hot, and often too warm to drink comfortably. To promote the ready drinkability of freshly brewed tea, the controller 332 of the tea maker 100 may preferably be configured not to heat the water during steeping. That is, from the point that the tea filter 216 is inserted into the water compartment 210, and steeping of the tea commences, the controller 332 may preferably refrain from heating the water, at least until the predetermined steeping time has lapsed. This allows the water to cool slightly during steeping, just like during traditional tea brewing, such that, at the end of the steeping phase, the brewed tea has a temperature that is at, or at least closer to, a safe and pleasant drinking temperature. Another benefit of refraining from heating during the steeping phase is that sugary content of the tea will not caramelize against heated parts of the tea maker 100, such as the partition 208. The controller 332 may, of course, be configured to maintain the water in the water compartment 210 at a suitable drinking temperature, for example in the range of 60-70°C, once the steeping phase has ended.

During the tea brewing process, the tea maker 100 may issue notifications to notify a user of a variety of events, as described. It is understood that these notifications may generally be given in any suitable way, including suitably lighting any of symbols 364,366 on the user interface panel 360, and/or generating sounds through the loudspeaker 330. In addition, notifications may be given by means of the brewing progress indicator 368. By way of example, possible uses of the brewing progress indicator 368 for issuing notifications will now be described in some more detail.

As its name implies, the brewing process indicator 368 may be used primarily to inform the user of any progress in the tea brewing process. In this respect, it may notify a user that certain steps or stages of the brewing process have been reached and or (partly) completed. The operation of the brewing process indicator 368 may be controlled by the controller 332, which to this end may be configured to control the first illumination means 322 according to an illumination notification pattern stored in the controller 332. A notification pattern may comprise a sequence or arrangement of different activities, such as activating and/or deactivating one or more first illumination means 322, increasing and/or decreasing the light intensity of one or more first illumination means, blinking of one or more illumination means during a predetermined time period with a predetermined frequency and setting a light emitting color of one or more first illumination means. Although one notification pattern may be used for all brewing programs, some embodiments may allow a notification pattern to be uniquely associated with a certain brewing program or tea type. In general, each of the first illumination means 322 may be individually controlled by the controller 332 in accordance with the prescriptions of the notification pattern.

To inform the user of any progress in the tea brewing process, the notification pattern may prescribe that the brewing progress indicator 168 is gradually illuminated or filled with light, for example by successively turning on adjacent first illumination means 322 so as to form a gradually extending string of light. At the start of the brewing process, the progress indicator 368 may thus not be illuminated, whereas at the point of completion of the brewing process, the progress indicator 368 may be illuminated completely (forming an illuminated ring). The notification pattern may prescribe that the brewing progress indicator 368 is to be illuminated in one color or in multiple colors (if provided for by the first illumination means 322), for example to form a multi-colored arc starting in green and ending in red.

In addition to its basic function of indicating brewing progress by having an indicative or proportional portion of its length illuminated, the brewing progress indicator 368 may also be used to notify the user of certain events or to provide him with information about the status of the tea maker 100.

For instance, at the start of the tea brewing process, the water in the vessel 200 is heated to a predetermined initial steeping temperature. The notification pattern may prescribe that the first illumination means 322 are to reflect the changing temperature of the water during this heating phase. Accordingly, the first illumination means may for example be controlled such that their color changes, for instance from blue when the water is cold, to red when the water is hot. Alternatively or in addition, the first illumination means 322 may be controlled to blink during the heating period with a predetermined frequency that depends on the water temperature. The first illumination means may for example blink at a low frequency when the water is cold, and at a high frequency when the water is hot. According to yet another alternative, the light intensity of the light emitted by the first illumination means 322 may be varied, from a low intensity when the water is cold, to a high intensity when the water is hot.

In another embodiment, the brewing process indicator 368 may be used to notify the user of filter placement (step 3 of the brewing process). For instance by periodically or continuously changing the color of the light that fills the brewing progress indicator 368, the user may be made aware of the fact that the tea filter 216 may be inserted. Alternatively, the first illumination means 322 of the progress indicator 368 may be controlled such that they start blinking. To avoid confusion, the controller 332 may control the first illumination means 322 such that the blinking frequency differs from the blinking frequency that is coupled to another notification that may be issued. Once the tea filter 216 has been placed, the brewing progress indicator 368 may continue to show the progress of the tea brewing process in the regular fashion.

In yet another embodiment, the brewing progress indicator 368 may be used to notify the user of the fact that tea is ready for consumption. Such a notification may, of course, be provided by the fact that the progress indicator 368 is completely filled with light, but again, notification pattern may additionally prescribe that the first illumination means 322 are controlled such they start blinking, for example by gradually fade in and out, or execute any other lighting variation mentioned above.

Apart from notifying the user of progress in the brewing process, e.g. that certain steps or stages have been reached, the progress indicator 368 may also be used to inform the user of information regarding the status of the tea maker 100. The controller 332 may, for example, be preprogrammed such that certain situations that may occur when using the tea maker 100 may initiate a notification. In case of the underfill situation of the overfill situation as described above, the tea maker 100, or at least the heating element 222, may be automatically switched off to prevent damage of the tea maker 100 or to prevent the occurrence of unsafe situations. Then, the user may be informed accordingly, for instance by means of a sound generated by the loudspeaker 330 and/or by means of the brewing progress indicator 368. Therefore, the controller 332 may control the first illumination means 322 to execute any of the aforementioned lighting variations. The brewing progress indicator 368 may also be used to periodically notify the user that the tea maker 100 needs to be cleaned or descaled.

With regard to the terminology used in this text the following is noted. The word 'tea' is generally used loosely to describe beverages made with the leaves of a plant. Accordingly, the word 'tea' not only refers to beverages prepared from the plant *Camellia sinensis,* but also intends to cover tisanes, herbal infusions and the like.

Although illustrative embodiments of the present invention have been described above, in part with reference to the accompanying drawings, it is to be understood that the invention is not limited to these embodiments. Variations to the disclosed embodiments can be understood and effected by those skilled in the art in practicing the claimed invention, from a study of the drawings, the disclosure, and the appended claims. Reference throughout this specification to "one embodiment" or "an embodiment" means that a particular feature, structure or characteristic described in connection with the embodiment is included in at least one embodiment of the present invention. Thus, the appearances of the phrases "in one embodiment" or "in an embodiment" in various places throughout this specification are not necessarily all referring to the same embodiment. Furthermore, it is noted that particular features, structures, or characteristics of one or more embodiments may be combined in any suitable manner to form new, not explicitly described embodiments.

**Claims**

1.  A tea maker (100), comprising:

    - a user interface panel (360) including one or more brewing program selection controls (362) configured to enable a user to select one of a plurality of tea type specific brewing program symbols (364); and
    - a controller (332), operably connected to the one or more brewing program selection controls, and configured to assign to each selectable brewing program symbol at least one parameter partly defining a temperature/time profile to be followed by water during brewing tea of the specific tea type.

2.  The tea maker according to claim 1, wherein the brewing program symbols (364) are non-alphabetic and non-numeric.

3.  The tea maker according to any of the claims 1-2, wherein at least one of the brewing program symbols (364) is comprised of circular dots.

4.  The tea maker according to any of the claims 1-3, wherein the one or more selection controls include a plurality of capacitive buttons (362), each provided with a tea type specific brewing program symbol (364).

5.  The tea maker according to any of the claims 1-4, wherein the controller (332) is configured to assign to each brewing program symbol (364) an initial steeping temperature.

6.  The tea maker according to any of the claims 1-5, wherein the controller (332) is configured to assign to each brewing program symbol (364) a steeping time.

7.  The tea maker according to any of the claims 1-6, wherein the controller (332) is configured to assign to each brewing program symbol (364) a Boolean pre-steep boiling flag, on the basis of which flag the controller can control whether or not water is heated to its boiling point prior to steeping

8.  The tea maker according to any of the claims 1-7, further comprising:

    - a water compartment (210);
    - heating means (222), configured to heat water contained in said water compartment; and
    - a temperature sensor (224), configured to generate a reference signal reflecting a temperature of the water contained in said water compartment,

    wherein the controller (332) is operably connected to both the heating means and the temperature sensor.

9.  The tea maker according to claim 8, further comprising:

    - user notification means (322, 324, 328, 330) including light and/or sound generating means, and

    wherein the controller (332) is operably connected to the user notification means.

10. The tea maker according to at least claims 5 and 9, wherein the controller (332) is configured control the heating means (222) to heat the water in the water compartment (210) to the initial steeping temperature, and to subsequently control the user notification means to notify a user that the initial steeping temperature has been reached so as to prompt him to insert tea into the water.

11. The tea maker according to claims 7 and 10, wherein the controller (332), in controlling the heating means to (222) to heat the water in the water compartment (210) to the initial steeping temperature, is configured to first heat the water to its boiling point and to subsequently let it cool to the initial steeping temperature, in case the value of the Boolean pre-steep boiling flag is true.

**12.** The tea maker according to claims 6 and 10, wherein the tea maker further comprises:

- a tea filter (216), configured for at least partial insertion into the water compartment (210); and
- a tea filter presence sensor (218, 226), configured to detect insertion of the tea filter into the water compartment (210),

wherein the controller (332) is configured to detect the insertion of the tea filter into the water compartment (210), and upon such detection, to count the steeping time and, upon expiry thereof, to control the user notification means to notify the user that steeping has been completed and the tea is ready for consumption.

**13.** An assembly, including:

- a tea package, configured to contain tea leaves and being provided with a brewing program symbol that codes for at least one parameter partly defining a temperature/time profile to be followed by water during brewing tea of the tea leaves contained by the package;
- a tea maker according to any of the claims 1-8, wherein the brewing program symbol provided on the tea package is comprised by the plurality of brewing program symbols of the selection control.

Fig. 1

Fig. 2

Fig. 3

357
358
356
354
352

320   324   326   324

# Fig. 4A

358
356
354
352

320   353   328   353

372
372

# Fig. 4B

| A | B | C |
|---|---|---|
| | | |

FIG. 5

FIG. 6

EP 2 446 788 A1

Europäisches
Patentamt

European
Patent Office

Office européen
des brevets

# EUROPEAN SEARCH REPORT

Application Number

EP 10 18 9044

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/018403 A1 (HOARE RICHARD [AU] ET AL) 28 January 2010 (2010-01-28) | 1-3,5-11 | INV. A47J31/20 |
| Y | * paragraphs [0028], [0029]; figures 1,11,12 * | 4,13 | |
| A | US 6 964 222 B1 (TUCKER GEORGE H [US]) 15 November 2005 (2005-11-15) * column 2, lines 62,63; figures 2A,3 * * column 3, lines 8,9,15,17,51,52,63,65 * | 1 | |
| Y | US 2005/150391 A1 (SCHIFFERLE RENE [CH] SCHMED ARTHUR [CH] ET AL) 14 July 2005 (2005-07-14) * paragraph [0019]; figure 1 * | 13 | |
| A | US 2007/151457 A1 (RABIN MICHELLE [US] ET AL) 5 July 2007 (2007-07-05) * figure 3 * | 1 | |
| A | WO 2007/142735 A1 (SUNBEAM PRODUCTS INC [US]) 13 December 2007 (2007-12-13) * figure 6b * | 1 | TECHNICAL FIELDS SEARCHED (IPC) |
| A | US 6 135 010 A (HUSTED ROYCE HILL [US] ET AL) 24 October 2000 (2000-10-24) * column 4, lines 18,19; figures 1,6,7 * | 1 | A47J G06F H04L |
| Y | US 2008/094372 A1 (PHILIPP HARALD [IE]) 24 April 2008 (2008-04-24) * paragraph [0041]; figures 1A,1B,4 * | 4 | |
| A | US 2010/075637 A1 (KIM KYUNG JIN [KR] ET AL) 25 March 2010 (2010-03-25) * paragraph [0133]; figure 8a * | 4 | |

The present search report has been drawn up for all claims

| Place of search | Date of completion of the search | Examiner |
|---|---|---|
| The Hague | 1 April 2011 | Visser, Rogier |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

20

**ANNEX TO THE EUROPEAN SEARCH REPORT
ON EUROPEAN PATENT APPLICATION NO.** EP 10 18 9044

This annex lists the patent family members relating to the patent documents cited in the above-mentioned European search report.
The members are as contained in the European Patent Office EDP file on
The European Patent Office is in no way liable for these particulars which are merely given for the purpose of information.

01-04-2011

| Patent document cited in search report | | Publication date | Patent family member(s) | | Publication date |
|---|---|---|---|---|---|
| US 2010018403 | A1 | 28-01-2010 | WO | 2008049163 A1 | 02-05-2008 |
| | | | AU | 2007308748 A1 | 02-05-2008 |
| | | | CN | 101557741 A | 14-10-2009 |
| | | | EP | 2079348 A1 | 22-07-2009 |
| | | | JP | 2010507411 T | 11-03-2010 |
| US 6964222 | B1 | 15-11-2005 | NONE | | |
| US 2005150391 | A1 | 14-07-2005 | AR | 047419 A1 | 18-01-2006 |
| | | | AU | 2005200116 A1 | 28-07-2005 |
| | | | BR | PI0500073 A | 06-09-2005 |
| | | | CA | 2492307 A1 | 14-07-2005 |
| | | | CN | 1640349 A | 20-07-2005 |
| | | | DE | 102004002004 A1 | 11-08-2005 |
| | | | DE | 202005021323 U1 | 23-08-2007 |
| | | | EP | 1554958 A2 | 20-07-2005 |
| | | | JP | 2005199070 A | 28-07-2005 |
| | | | KR | 20050074908 A | 19-07-2005 |
| | | | MX | PA05000544 A | 15-07-2005 |
| | | | NZ | 537676 A | 30-06-2006 |
| | | | RU | 2286076 C2 | 27-10-2006 |
| | | | SG | 113574 A1 | 29-08-2005 |
| | | | ZA | 200500321 A | 19-07-2005 |
| US 2007151457 | A1 | 05-07-2007 | NONE | | |
| WO 2007142735 | A1 | 13-12-2007 | US | 2007283815 A1 | 13-12-2007 |
| | | | US | 2007283816 A1 | 13-12-2007 |
| US 6135010 | A | 24-10-2000 | NONE | | |
| US 2008094372 | A1 | 24-04-2008 | DE | 102007049558 A1 | 30-04-2008 |
| | | | DE | 202007014467 U1 | 07-02-2008 |
| | | | GB | 2443067 A | 23-04-2008 |
| | | | JP | 2008102938 A | 01-05-2008 |
| | | | KR | 20080035488 A | 23-04-2008 |
| US 2010075637 | A1 | 25-03-2010 | WO | 2010035932 A1 | 01-04-2010 |

EPO FORM P0459

For more details about this annex : see Official Journal of the European Patent Office, No. 12/82

**EP 2 446 788 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2008049163 A, Hoare